(19) Europäisches Patentamt
European Patent Office
Office européen des brevets

(11) Veröffentlichungsnummer : **0 416 271 B1**

(12) # EUROPÄISCHE PATENTSCHRIFT

(45) Veröffentlichungstag der Patentschrift : **18.08.93 Patentblatt 93/33**

(51) Int. Cl.$^5$ : **C08G 77/54,** C08G 77/58, C08G 77/28, B01J 20/26

(21) Anmeldenummer : **90114425.3**

(22) Anmeldetag : **27.07.90**

(54) **Aminoalkylsubstituierte Organopolysiloxan-Thioharnstoff-Derivate, Verfahren zu ihrer Herstellung und Verwendung.**

(30) Priorität : **31.07.89 DE 3925358**

(43) Veröffentlichungstag der Anmeldung : **13.03.91 Patentblatt 91/11**

(45) Bekanntmachung des Hinweises auf die Patenterteilung : **18.08.93 Patentblatt 93/33**

(84) Benannte Vertragsstaaten : **AT BE CH DE DK ES FR GB IT LI LU NL**

(56) Entgegenhaltungen :
**EP-A- 0 169 992**
**EP-A- 0 280 946**
**EP-A- 0 282 737**
**EP-A- 0 367 104**
**EP-A- 0 367 105**
**EP-A- 0 367 106**

(73) Patentinhaber : **Degussa Aktiengesellschaft**
**Weissfrauenstrasse 9**
**D-60311 Frankfurt (DE)**

(72) Erfinder : **Panster, Peter, Dr.**
**Im Lochseif 8**
**D-6458 Rodenbach (DE)**
Erfinder : **Deschler, Ulrich, Dr.**
**De Zwaan 17**
**B-2130 Brasschaat (BE)**
Erfinder : **Kleinschmit, Peter, Dr.**
**Wildaustrasse 19**
**D-6450 Hanau 9 (DE)**

EP 0 416 271 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind neue, in Wasser und organischen Lösungsmitteln unlösliche aminoalkylsubstituierte Organopolysiloxan-Thioharnstoffe, die als selektive Metallabsorber Verwendung finden. Die neuen funktionellen Polymeren können eingesetzt weiden, um in hoher Verdünnung vorliegende Metalle aus wäßrigen und organischen Lösungen abzutrennen. Bereiche, in denen diese Eigenschaften vorteilhaft genutzt werden können, sind vor allem die Primärgewinnung und das Recycling von Edel- sowie Unedelmetallen und die Reinigung von Abwasser. Verfahren zur Herstellung und Verwendung der neuen Produkte werden beschrieben.

Polymere unlösliche Reagenzien werden vorteilhaft in der chemischen oder pharmazeutischen Synthese, auf dem Gebiet der Biotechnologie, in der Hydrometallurgie oder in der Wasserreinigung eingesetzt, z. B. als Ionenaustauscher, Katalysator, Katalysatorträger, Enzymträger, Metallabsorber. Beispiele hierfür sind z. B. in Chem. Rev. Bd. 81 , S. 557 (1981) , in Ann. Rep. Prog. Chem. Sect. B 83, S 283 (1986) publ. (1987) oder auch in der EP-OS 0 201 286 beschrieben.

Die bekannten Polymeren basieren häufig auf organischen Polymersystemen, welche in einer Reihe von Fällen nicht den an sie gestellten Anforderungen in bezug auf thermische und mechanische Stabilität, Inertness gegenüber chemischen Angriffen, Unlöslichkeit und Zugänglichkeit der funktionellen Gruppen erfüllen. Die Verwendung anorganischer Polymersysteme, wie z. B. Kieselgel, als Träger funktioneller Gruppen vermeidet zwar überwiegend die vorstehend genannten Nachteile, bietet jedoch nur die Möglichkeit einer relativ geringen Funktionalisierbarkeit (vgl. DE-OS 24 33 409).

Nach einem neuen Konzept der Hydrolyse und Polykondensation von geeigneten organofunktionellen Silanen können inzwischen organofunktionelle Polysiloxane erhalten werden, die einerseits eine hohe Funktionalität und andererseits die vorteilhaften physikalischen Eigenschaften anorganischer Polymersysteme aufweisen. Derartige Polymersysteme werden bereits in Angewandte Chemie Bd. 98, S. 237 (1986) beschrieben.

Aufgabe der Erfindung war es, die Palette der bisher verfügbaren Organopolysiloxane zu vergrößern und neue Derivate bereitzustellen, die als funktionelle Gruppe eine substituierte Thioharnstoffgruppe aufweisen und insbesondere als selektive Metallabsorber eingesetzt werden können.

Die Aufgabe wurde dadurch gelöst, daß neue Organopolysiloxane entwickelt wurden, die im Anspruch 1 gekennzeichnet sind.

Die monomeren Vorstufen der polymeren aminoalkylsubstituierten Thioharnstoffe sind überwiegend prinzipiell bekannte Verbindungen. Solche Monomere sind z.B.

$$(H_5C_2O)_3Si-(CH_2)_3-NH-\overset{\overset{\textstyle S}{\|}}{C}-NH-(CH_2)_3-N(CH_3)_2$$

$$(H_3CO)_3Si-(CH_2)_3-NH-\overset{\overset{\textstyle S}{\|}}{C}-\underset{\underset{\textstyle (CH_2)_2-N(C_2H_5)_2\cdot}{|}}{N}-(CH_2)_3-Si(OCH_3)_3$$

$$[(H_5C_2O)_3Si-(CH_2)_5]_2N-\overset{\overset{\textstyle S}{\|}}{C}-NH-(CH_2)_3-N(C_2H_5)_2$$

(N,N'-disubstituierte und N,N,N'-/N,N',N'-trisubstituierte organyloxysilyl-funktionelle Thioharnstoffe, die zusätzlich eine tertiäre Aminfunktion aufweisen, sind in der parallel eingereichten EP-A-4 11313 bezüglich Stoff und Herstellungsmöglichkeiten beschrieben).

Die Zusammensetzung der daraus herstellbaren Polymereinheiten laßt sich durch die Formeln

$$O_{3/2}Si-(CH_2)_3-NH-\overset{\overset{\textstyle S}{\|}}{C}-NH-(CH_2)_3-N(CH_3)_2$$

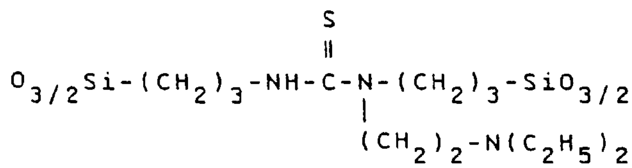

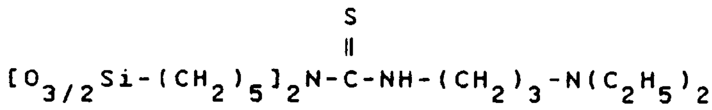

beschreiben.

Im Fall der Herstellung sog. vernetzter Derivate können diese natürlich in unterschiedlichen Formen vorliegen, auch wenn von der chemischen Zusammensetzung her kein Unterschied gegeben ist.

Einerseits können die Gruppen nach Formel (I) und Formel (IV) rein statistisch verteilt nebeneinander vorliegen oder sie können in Form von Blöcken oder aber auch sowohl in Form von Blöcken als auch statistisch verteilt nebeneinander vorliegen. Jede dieser möglichen Formen wird nach einem bestimmten Verfahren erhalten, das auch Gegenstand der Erfindung ist und in den Ansprüchen 4 bis 9 zum Ausdruck kommt.

Besondere Vorteile bezüglich der Verfügbarkeit der Ausgangsmaterialien und der stofflichen Eigenschaften wurden mit Polymeren erreicht, in denen die Einheiten nach Formel (II) eine Gruppe der Formel

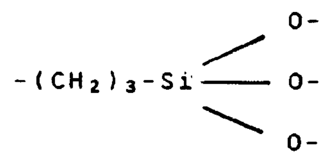

darstellen.

Gegenstand der Erfindung sind auch Verfahren zur Herstellung der erfindungsgemäßen polymeren Thioharnstoff-Derivate.

Prinzipiell können als Ausgangsstoffe für das Verfahren von Anspruch 4 anstelle der Alkoxysilylverbindungen auch die entsprechenden Halogenid- oder Phenoxyverbindungen eingesetzt werden, doch bietet deren Verwendung keine Vorteile, sondern kann, z. B. im Fall der Chloride, Schwierigkeiten durch die bei der Hydrolyse freiwerdende Salzsäure verursachen.

Die Hydrolyse der Ausgangsstoffe und gegebenenfalls Vernetzer muß in einem weitgehend wassermischbaren, aber die Ausgangsstoffe lösenden Lösungsmittel durchgeführt werden. Bevorzugt werden dabei die Alkohole verwendet, die zu den Alkoxygruppierungen an den monomeren Vorstufen der Ausgangsstoffe bzw. an den Metallatomen der gegebenenfalls eingesetzten Vernetzer korrespondieren. Besonders geeignet sind lineare oder verzweigte Alkohole mit 1 bis 5 C-Atomen, wie Methanol, Ethanol, n- und i-Propanol, n- und i-Butanol oder n-Pentanol allein oder in Mischung (Anspruch 5). Anstelle von Alkoholen können auch andere polare Lösungsmittel, die weitgehend mischbar sind, verwendet werden, doch erweist sich dies aus verfahrenstechnischen Gründen wegen der mit dem hydrolytisch abgespaltenen Alkohol zustandekommenden Lösungsmittelgemische als nicht so günstig.

Bevorzugt führt man die Hydrolyse mit einem Überschuß an Wasser über die stöchiometrisch erforderliche Menge hinaus durch (Anspruch 6). Die in der Praxis zur Hydrolyse eingesetzte Menge Wasser hängt von der Hydrolysegeschwindigkeit der jeweils verwendeten Monomeren derart ab, daß mit zunehmender Menge Wasser und bei höheren Temperaturen raschere Hydrolyse erfolgt. Allerdings kann eine Obergrenze durch auftretende Entmischung und Ausbildung eines Zweiphasensystems gegeben sein. Grundsätzlich ist eine Hydrolyse in homogener Lösung vorzuziehen.

Der Polykondensationsprozeß selbst kann bei verschiedenen Temperaturen durchgeführt werden. Nachdem die Polykondensation bei höheren Temperaturen am schnellsten verläuft, ist es am einfachsten, diese bei Rückflußtemperatur oder knapp darunter erfolgen zu lassen. Prinzipiell können Hydrolyse und/oder Polykondensation auch bei höheren Temperaturen, d. h. unter Druck durchgeführt werden.

Bei der Polykondensation kann das Reaktionsgemisch zu einer festen Masse erstarren. Aus diesem Grunde ist es angebracht, eine entsprechende Menge Lösungsmittel oder Wasser zur Verdünnung zuzusetzen. Das Lösungsmittel wird dabei in der Regel dasselbe sein, das schon bei der Hydrolyse der Silane eingesetzt wurde, d. h. bevorzugt wird ein niederer Alkohol mit 1 bis 5 C-Atomen verwendet. Ob im Einzelfall Wasser oder ein

Lösungsmittel zur Verdünnung zugesetzt wird, hängt auch davon ab, welche physikalischen Eigenschaften das herzustellende Organopolysiloxan haben soll.

Auch durch die Dauer und Temperatur der bis zu 48-stündigen Nachreaktion kann hierauf Einfluß genommen werden. In der Regel führt eine Nachreaktion bei höherer Temperatur zu einer Erhöhung der mechanischen Stabilität und zu einer gefestigten Struktur des gebildeten Produkts.

Die Abtrennung des gebildeten Produktes kann nach gängigen Techniken, wie Filtrieren, Dekantieren oder Zentrifugieren oder auch durch Abdestillieren der flüssigen Phase erfolgen. Die Waschung des gebildeten Feststoffs wird bevorzugt mit dem bei der Fällung verwendeten Lösungsmittel oder mit Wasser durchgeführt. Die Maßnahme der Temperung erweist sich im Hinblick auf eine Erhöhung der physikalischen Stabilität der Polykondensate oft als sinnvoll.

Das getrocknete bzw. getemperte Produkt kann in üblichen Vorrichtungen in verschiedene Korngrößen klassifiziert werden. Von den einzelnen Aufarbeitungsmaßnahmen Waschung, Trocknung, Temperung und Klassifizierung kann die eine oder andere entfallen oder in einer anderen Reihenfolge durchgeführt werden. Eine Klassifizierung kann z. B. auch an feuchtem, gegebenenfalls vorher getrocknetem oder getempertem Produkt durchgeführt werden.

Die Dauer der Hydrolyse hängt von der Hydrolyseneigung von Ausgangsstoff gemäß Formel (V) und/oder Vernetzer gemäß Formel (VII) ab. Die Hydrolysebereitschaft und damit -geschwindigkeit hängt wiederum insbesondere von der Art der Silicium-, bzw, Titan-, Zirkonium- oder Aluminium-ständigen Alkoxygruppen ab, wobei die Methoxygruppe am schnellsten hydrolysiert und mit steigender Kettenlänge oder mit zunehmender Verzweigung eine Verlangsamung eintritt.

Hydrolyse und Polykondensation können durch Zusatz von Basen, wie z. B. Ammoniak, oder auch von Säuren, wie z.B. HCl, aber auch durch Verwendung eines gängigen Kondensationskatalysators, wie z. B. Dibutylzinndiacetat, beschleunigt werden.

Um ein unterschiedliches Hydrolyse- und Polykondensationsverhalten der Silanmonomeren nach Formel (V) und der Vernetzerkomponente nach Formel (VII) auszugleichen, können nach einer vorzugsweisen Herstellungsvariante der Erfindung die Monomeren zunächst vorkondensiert werden.

Hierzu wird das Silan nach Formel (V) und der oder die Vernetzer nach Formel (VII) ohne oder unter Verwendung eines Lösungsmittels, z. B. unter Verwendung eines zu den Alkoxygruppen korrespondierenden Alkohols mit 1 bis 5 C-Atomen, in Gegenwart einer innerhalb des vorgegebenen Vorkondensationszeitraumes nicht zur vollständigen Hydrolyse ausreichenden Menge Wasser, vorzugsweise in Gegenwart von 1 bis 100 Mol% der hierzu benötigten Menge, über einen Zeitraum von 5 Min. bis zu 72 Stunden bei Raumtemperatur bis 200° C vorkondensiert und dann nach Zusatz weiteren Wassers und gegebenenfalls weiteren Lösungsmittels die vollständige Hydrolyse und Kondensation durchgeführt (Anspruch 7).

Um diesen Vorkondensationseffekt zu begünstigen, kann dabei ein Kondensationskatalysator der vorstehend genannten Art zugesetzt werden. Bevorzugt wird Ammoniak, Salzsäure, Essigsäure oder Phosphorsäure verwendet. Nach erfolgter Vorkondensation wird die vollständige Hydrolyse und Kondensation wie beschrieben durchgeführt. Die Vorkondensation kann natürlich auch unter einem Druck durchgeführt werden, der der Summe der Partialdrucke der Reaktionskomponenten entspricht.

Bei speziellen Anwendungen oder besonders erwünschten physikalischen Eigenschaften der erfindungsgemäß vernetzten aminoalkylsubstituierten Organopolysiloxan-Thioharnstoff-Derivate kann es sich nach einer weiteren erfindungsgemäßen Herstellungsvariante als vorteilhaft erweisen, die Monomerkomponente nach Formel (V) und den oder die Vernetzer nach Formel (VII) jeweils unabhängig voneinander vorzukondensieren. Dieses Vorgehen führt zur Bildung von Polymeren, bei denen die Polymereinheiten nach Formel (I) und (IV) in Form von Blöcken vorliegen. Dieses Verfahren sieht vor, daß eine Silankomponente der Formel (V) und der oder die Vernetzer nach Formel (VII) jeweils voneinander unabhängig, ohne oder unter Verwendung eines Lösungsmittels, z. B. unter Verwendung eines zu den Alkoxygruppen korrespondierenden Alkohols mit 1 bis 5 C-Atomen, in Gegenwart einer innerhalb des vorgegebenen Vorkondensationszeitraumes nicht zur vollständigen Hydrolyse ausreichenden Menge Wasser, vorzugsweise in Gegenwart von 1 bis 100 Mol% der hierzu benötigten Menge, über einen Zeitraum von 5 Min. bis zu 72 Stunden bei Raumtemperatur bis 200 C vorkondensiert und anschließend die vorkondensierten Komponenten vereinigt werden und dann die vollständige Hydrolyse und Polykondensation, wie beschrieben, durchgeführt werden (Anspruch 8). Natürlich kann bei dieser Vorkondensation auch wieder einer der beschriebenen Vorkondensationskatalysatoren verwendet oder die Vorkondensation unter Druck durchgeführt werden.

Nach einer weiteren erfindungsgemäßen Herstellungsvariante werden Produkte erhalten, bei denen die Polymereinheiten nach Formel (I) und (IV) teilweise in Form von Blöcken vorliegen, d. h. nach dieser Variante wird stets mindestens eine Monomerkomponente nach Formel (V) oder (VII), wie vorstehend beschrieben, vorkondensiert und mindestens eine Monomerkomponente nach Formel (V) oder (VII) nicht vorkondensiert. Anschließend werden vorkondensierte und nicht vorkondensierte Komponenten miteinander vereinigt und nach

Zusatz weiteren Wassers sowie gegebenenfalls weiteren Lösungsmittels wird die vollständige Hydrolyse und Polykondensation der Gesamtmischung wie vorstehend beschrieben durchgeführt. Die weitere Behandlung des dabei gebildeten Polykondensates gestaltet sich dann wie bei den anderen erfindungsgemäßen Verfahrensweisen (Anspruch 9).

Charakterisiert sind die neuen substituierten Organopolysiloxan-Thioharnstoff-Derivate insbesondere anhand der quantitativen Hydrolyseausbeuten, der Elementaranalysen und durch ihr chemisches Verhalten.

Zwischen den nach den unterschiedlichen Herstellungsverfahren erhaltenen Copolykondensaten besteht rein optisch kein Unterschied. Je nach Vorbehandlung besitzen die erfindungsgemäßen Polymeren Oberflächen von 0,1 bis 1200 $m^2/g$ und Teilchengrößendurchmesser von ca. 1 cm bis 1 μm. Ein bevorzugter Teilchengrößenbereich ist dabei ohne weiteres einstellbar.

Die Zersetzungspunkte für die neuen polymeren Thioharnstoffe sind natürlich unterschiedlich. Generell liegen sie jedoch an der Luft bei deutlich über 100° C und unter Schutzgasatmosphäre bei über 150° C.

Ein weiterer wichtiger Gegenstand der Erfindung besteht in der Verwendung der erfindungsgemäßen polymeren Thioharnstoff-Derivate zur Entfernung von gelösten Metallen aus einer flüssigen wäßrigen oder organischen Phase nach dem statischen oder dynamischen Prinzip (Anspruch 10) . Natürlich zeigen die polymeren Thioharnstoffe dabei vergleichbare Affinitäten zu den verschiedenen Metallen wie monomere, lösliche Thioharnstoffe vergleichbarer Struktur.

Die Erfindung wird nachfolgend anhand von Ausführungsbeispielen weiter erläutert.

Beispiel 1

291,99 g (0,5 Mol) des aminoalkylsubstituierten Thioharnstoffes

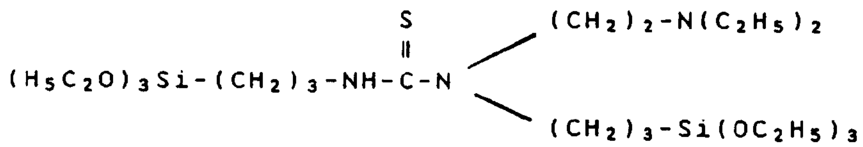

wurden in 300 ml Ethanol gelöst. Die Lösung wurde in einem 2 l Dreihalskolben mit KPG-Rührer, Rückflußkühler und Tropftrichter auf Rückflußtemperatur aufgeheizt und in der Siedehitze mit 100 ml $H_2O$ versetzt. Es wurde unter Rückfluß weiter gerührt, bis nach ca. 0,5 h die Gelierung einsetzte. Der gebildete Feststoff wurde mit 400 ml Ethanol verdünnt, dann noch 1 Stunde unter Rückfluß gerührt, nach dem Abkühlen der Mischung über eine Saugnutsche abfiltriert, mit 2 x 200 ml Ethanol gewaschen und 20 h bei 100° C in einem Trockenschrank getrocknet. Der teilweise in Form von Pulver und teilweise in Form von Brocken vorliegende polymere Harnstoff wurde noch 2 h in einer Kugelmühle gemahlen und dann ausgewogen. Erhalten wurden 179,3 g (99,2 % der Theorie) polymeres Produkt, bestehend aus Polymereinheiten der Formel

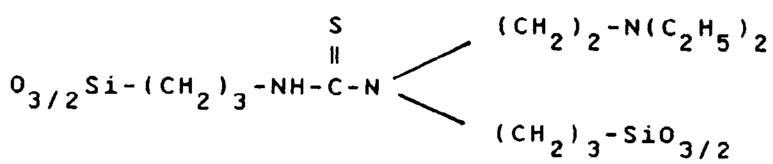

| Analysen: | % C | % H | % N | % S | % Si |
|---|---|---|---|---|---|
| Theorie: | 43,2 | 7,5 | 11,6 | 8,9 | 15,5 |
| Gefunden: | 43,0 | 7,3 | 11,4 | 8,7 | 15,2 |

Spezifische Oberfläche: 586 $m^2/g$

Beispiel 2

Ausgehend von 171,0 g (0,3 Mol) des substituierten Thioharnstoffs der Formel

$$(H_3C_2)N-(CH_2)_3-HN-\overset{\overset{\displaystyle S}{\|}}{C}-N[(CH_2)_3Si(OC_2H_5)_3]_2$$

wurden analog zu Beispiel 1 100,9 g (96,8 % der Theorie) eines substituierten polymeren Harnstoffs, bestehend aus Polymereinheiten der Formel

$$(H_3C)_2N-(CH_2)_3-HN-\overset{\overset{\displaystyle S}{\|}}{C}-N[(CH_2)_3SiO_{3/2}]_2$$

in einer Korngröße von 30 µm bis 100 µm erhalten.

| Analysen: | % C | % H | % N | % S | % Si |
|---|---|---|---|---|---|
| Theorie: | 41,5 | 7,3 | 12,1 | 9,2 | 16,2 |
| Gefunden: | 40,2 | 6,7 | 12,3 | 9,3 | 15,8 |

Spezifische Oberfläche: 623 $m^2/g$

Beispiel 3

59, 1 g (0,2 Mol) des substituierten Thioharnstoff-Derivates

$$(H_3CO)_3Si-(CH_2)_3-NH-\overset{\overset{\displaystyle S}{\|}}{C}-NH-(CH_2)_3-NH_2$$

und 208,3 g (1,0 Mol) $Si(OC_2H_5)_4$ wurden in 300 ml Methanol gelöst. Die Lösung wurde in einem 2 l-Dreihalskolben mit KPG-Rührer und Rückflußkühler mit 150 ml entsalztem Wasser versetzt, auf Rückflußtemperatur aufgeheizt und 15 min. bei dieser Temperatur gerührt. Die Lösung wurde dann wieder auf Raumtemperatur abgekühlt und solange weiter gerührt, bis die Gelierung einsetzte. Die gebildete Suspension wurde mit 15 ml 10 %iger $NH_3$-Lösung versetzt, dann in einen Autoklaven überführt und 24 h bei 160°C weiter gerührt. Es wurde abgekühlt, der gebildete Feststoff abfiltriert, mit 2 x 200 ml Wasser gewaschen und 24 h bei 130° C getrocknet sowie 24 h bei 180° C unter $N_2$-Atmosphäre getempert. Es wurden 103,6 g (98,3 % der Theorie) eines aminopropylsubstituierten polymeren Tioharnstoffs, bestehend aus Polymereinheiten der Formel

$$O_{3/2}Si-(CH_2)_3-NH-\overset{\overset{\displaystyle S}{\|}}{C}-NH-(CH_2)_3-NH_2 \cdot 5SiO_2$$

erhalten.

| Analysen: | % C | % H | % N | % S | % Si |
|---|---|---|---|---|---|
| Theorie: | 16,0 | 3,1 | 8,0 | 6,1 | 32,0 |
| Gefunden: | 16,2 | 3,4 | 7,9 | 6,3 | 31,7 |

Spezifische Oberfläche: 786 $m^2/g$

Beispiel 4

191,5 g (0,4 Mol) des substituierten Thioharnstoffs der Formel

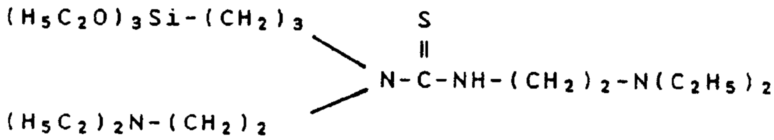

166,7 g (0.8 Mol) $Si(OC_2H_5)4$ und 118,6 g (0,8 Mol) $(H_3C)_2Si(OC_2H_5)_2$ wurden in 500 ml Isopropanol gelöst. Die klare Lösung wurde mit 15 ml entsalztem Wasser versetzt und in einem 4 l-Dreihalskolben mit KPG-Rührer und Rückflußkühler auf Rückflußtemperatur aufgeheizt. Es wurde zunächst 5 h unter Rückfluß gerührt, dann weitere 120 ml Wasser zugesetzt und solange weiter gerührt, bis die Gelierung einsetzte. Das gebildete Gel wurde mit 300 ml Isopropanol verdünnt und noch 3 h unter Rückfluß gerührt. Es wurde abgekühlt, der gebildete Feststoff von der flüssigen Phase abfiltriert, mit Isopropanol gewaschen und 24 h bei 130° C unter $N_2$-Atmosphäre getrocknet. Erhalten wurden 248,6 g (97,7 % der Theorie) polymeres Produkt, bestehend aus Polymereinheiten der Formel

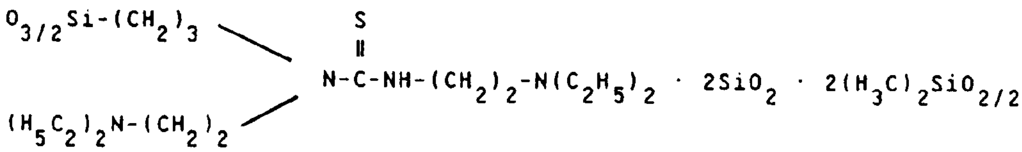

erhalten.

| Analysen: | % C | % H | % N | % S | % Si |
|---|---|---|---|---|---|
| Theorie: | 37,8 | 7,4 | 8,8 | 5,0 | 22,1 |
| Gefunden: | 36,9 | 7,3 | 8,6 | 4,9 | 21,5 |

Spezifische Oberfläche: 186 $m^2/g$

Beispiel 5

194,3 g (0,4 Mol) des substituierten Thioharnstoff-Derivates

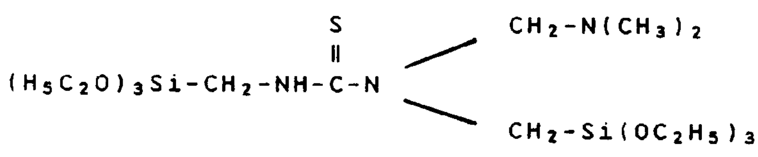

wurden mit 39,7 g (0,2 Mol) $C_6H_5$-$Si(OCH_3)_3$, das vorher in Gegenwart von 1 ml 0,1 n wäßriger HCl-Lösung über einen Zeitraum von 3 h bei 80° C vorkondensiert worden war, in 300 ml Ethanol vereinigt. Nach Zusatz von 100 ml $H_2O$, Aufheizen auf Rückflußtemperatur und weiterer Verfahrensweise analog zu Beispiel 1 wurden 130,0 g (99,0 % der Theorie) polymeres Produkt mit einer Korngröße von 30 μm bis 100 μm, bestehend aus Polymereinheiten der Formel

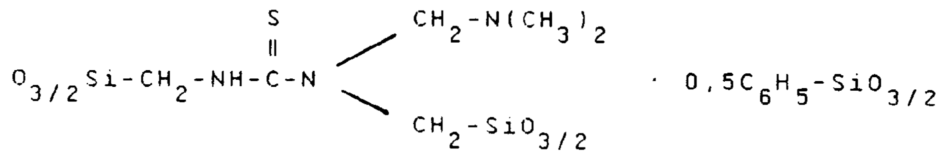

erhalten.

| Analysen: | % C | % H | % N | % S | % Si |
|---|---|---|---|---|---|
| Theorie: | 33,0 | 4,8 | 12,8 | 9,8 | 21,4 |
| Gefunden: | 32,6 | 4,9 | 12,6 | 9,7 | 20,7 |

Spezifische Oberfläche: 31 $m^2/g$

Beispiel 6

224,9 g (0,5 Mol) des substituierten Thioharnstoff-Derivates

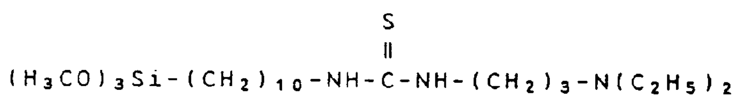

wurden mit 5 ml wäßriger 2 %iger $NH_3$-Lösung versetzt und 5 h bei 80° C gerührt. Parallel dazu wurden 268,3 g (1,0 Mol) $i\text{-}C_3H_7Ti(OC_3H_7)_3$ mit 5 ml wäßriger 0,1 n HCl-Lösung versetzt und 2 h bei 80° C gerührt. Nach abgeschlossener Vorkondensation wurden beide Komponenten in 500 ml Isopropanol vereinigt, auf Rückflußtemperatur aufgeheizt und mit 150 ml $H_2O$ versetzt. Während der Rückflußphase setzte Gelbildung ein. Es wurde mit 300 ml Wasser verdünnt und noch 2 h unter Rückfluß gerührt, dann analog zu Beispiel 4 aufgearbeitet.

Erhalten wurden 607,2 g (99,4 % der Theorie) polymeres Produkt, bestehend aus Polymereinheiten der Formel

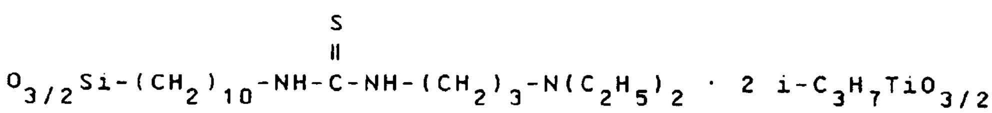

| Analysen: | % C | % H | % N | % S | % Ti |
|---|---|---|---|---|---|
| Theorie: | 47,2 | 8,6 | 6,9 | 5,3 | 15,7 |
| Gefunden: | 46,9 | 8,3 | 6,6 | 4,9 | 15,6 |

Spezifische Oberfläche: 72 $m^2/g$

Beispiel 7

204,3 g (0,5 Mol) des substituierten Thioharnstoff-Derivates

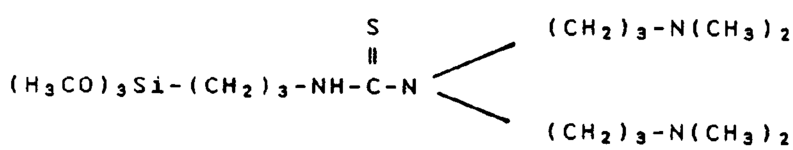

152,2 g (1 ,0 Mol) $Si(OCH_3)_4$ und 24,6 g (0,1 Mol) $Al(OC_4H_9)_3$ wurden miteinander vereinigt. Die Mischung wurde mit 5 ml 5 %iger wäßriger $NH_3$-Lösung versetzt und 3 h bei 80° C gerührt. Dann wurden 300 ml Methanol sowie 80 ml Wasser zugesetzt und noch 2 h unter Rückfluß gerührt. Nach Aufarbeitung analog zu Beispiel 4 wurden 231,4 g (98,5 % der Theorie) polymeres Produkt, bestehend aus Polymereinheiten der Formel

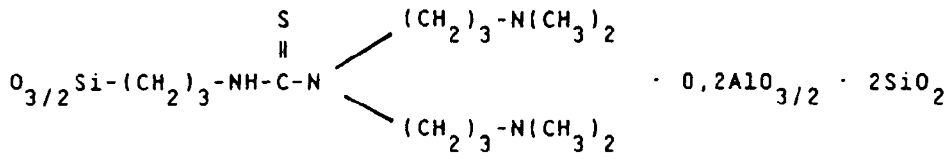

erhalten.

| Analysen: | % C | % H | % N | % S | % Si | % Al |
|---|---|---|---|---|---|---|
| Theorie: | 35,8 | 6,6 | 11,9 | 6,8 | 17,9 | 1,1 |
| Gefunden: | 34,9 | 6,3 | 11,7 | 6,5 | 17,6 | 0,9 |

Spezifische Oberfläche: 253 $m^2/g$

Beispiel 8

159,5 g (0,25 Mol) des substituierten Thioharnstoff-Derivates der Formel

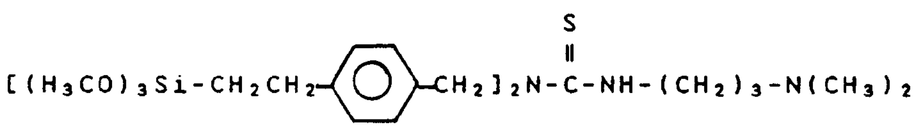

und 19,2 g (0,05 Mol) $Zr(OC_4H_9)_4$ wurden analog zu Beispiel 7 mit 5 ml 5 %iger wäßriger $NH_3$-Lösung vorkondensiert, anschließend vollständig hydrolysiert, kondensiert und aufgearbeitet. Erhalten wurden 129,6 g (98,9 % der Theorie) polymeres Produkt, bestehend aus Polymereinheiten der Formel

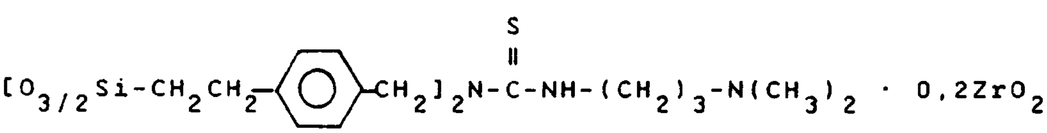

| Analysen: | % C | % H | % N | % S | % Si | % Zr |
|---|---|---|---|---|---|---|
| Theorie: | 55,0 | 6,3 | 8,0 | 6,1 | 10,7 | 3,5 |
| Gefunden: | 54,8 | 6,4 | 7,8 | 6,0 | 10,4 | 3,3 |

Spezifische Oberfläche: 25 $m^2/g$

Beispiel 9

5 g des nach Beispiel 1 hergestellten aminoalkylsubstituierten Organopolysiloxan-Thioharnstoffs wurden in 100 ml Wasser suspendiert, in denen 20 mg Palladium in Form von $Na_2PdCl_4$ gelöst waren. Die Suspension wurde 1 Stunde bei Raumtemperatur gerührt und dann der Feststoff abfiltriert. Eine Analyse des Filtrats ergab einen Rest-Pd-Gehalt in der Lösung von kleiner als 0,05 mg.

Beispiel 10

5 g des nach Beispiel 4 hergestellten polymeren Thioharnstoffs wurden in 100 ml Ethanol suspendiert, in denen 50 mg Rhodium in Form von Rhodiumacetat gelöst waren. Die Suspension wurde 2 Stunden unter Rückfluß gerührt, dann der Feststoff von der flüssigen Phase abfiltriert und mit insgesamt 50 ml Ethanol nachgewaschen. Eine Analyse von Filtrat plus Waschlösung ergab einen Rest-Rhodium-Gehalt von 0,1 mg.

Beispiel 11

5 g des nach Beispiel 2 hergestellten polymeren Thioharnstoffs wurden 1 Stunde in 100 ml Wasser suspendiert, in denen 5 mg Blei in Form von Bleiacetat gelöst waren. Nach analoger Behandlung der Suspension wie in Beispiel 10 verblieben 0,05 mg Blei in Lösung.

Beispiel 12

10 g des nach Beispiel 7 hergestellten Thioharnstoffs mit einer Korngröße von 0,1 bis 0,5 mm wurden in eine Säule mit einem Innendurchmesser von 15 mm überführt. Die Säule wurde mit 200 ml Wasser, in denen 20 mg Ag in Form von $AgNO_3$ gelöst waren, innerhalb 1 Stunde beschickt. Es wurde mit 300 ml $H_2O$ nachgewaschen und das Waschwasser mit der durchgelaufenen Lösung vereinigt. Eine Analyse der Gesamtlösung ergab einen Rest-Silber-Gehalt von 0,01 mg.

**Patentansprüche**

1. Aminoalkylsubstituierte Organopolysiloxan-Thioharnstoffe, aufgebaut aus Einheiten der Formel

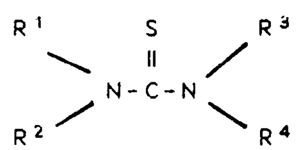

(I)

wobei
$R^1$ für eine Gruppe der Formel

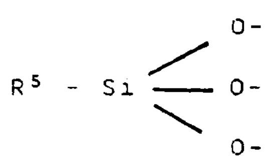

(II)

steht, in der $R^5$ eine Alkylengruppe mit 1 bis 10 C-Atomen oder eine Cycloalkylengruppe mit 5 bis 8 C-Atomen oder ein Rest der Formel

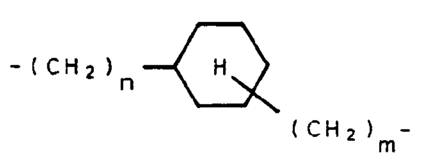

oder

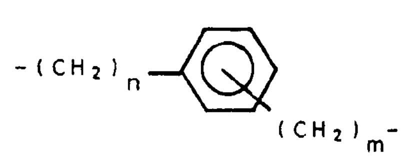

mit
n = 1 - 6 (am Stickstoff)
m = 0 - 6 (am Silicium)
ist,
wobei $R^2$ dieselbe Bedeutung wie $R^1$ hat oder für H steht, $R^3$ dieselbe Bedeutung wie $R^1$ hat oder für H oder eine Gruppe

$$-(CH_2)_n-NR^6_2 \qquad (III)$$

steht, in der n = 1 - 6 ist und $R^6$ gleich H oder eine lineare oder verzweigte Alkylgruppe mit 1 bis 5 C-Atomen bedeutet,
$R^4$ für H oder eine Gruppe der Formel (III) steht, und in der Polymereinheit nach Formel (I) höchstens 2 Gruppen der Formel (II) und höchstens 2 Gruppen der Formel (III) enthalten sind,
und die freien Valenzen der an das Siliciumatom gebundenen Sauerstoffatome wie bei Kieselsäuregerüsten durch Siliciumatome weiterer Gruppen der Formel (II) und/oder über die Metallatome in einem oder mehreren vernetzenden Brückengliedern

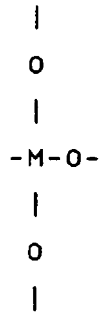 oder 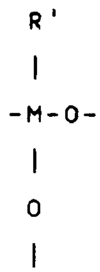 oder 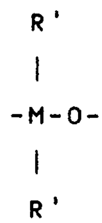 (IV)

bzw.

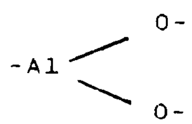 oder 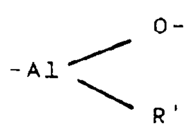 (IV)

abgesättigt sind, wobei M ein Silicium-, Titan- oder Zirkoniumatom und R' eine Phenylgruppe oder eine lineare oder verzweigte Alkylgruppe mit 1 bis 5 C-Atomen ist und das Verhältnis der Siliciumatome aus den Gruppen der allgemeinen Formel (II) zu den Metallatomen in den Brückengliedern nach Formel (IV) 1 : 0 bis 1 : 20 beträgt.

2. Aminoalkylsubstituierte Organopolysiloxan-Thioharnstoffe gemäß Anspruch 1,
**dadurch gekennzeichnet,**
daß sie in bezug auf die gegebenenfalls vorhandenen Vernetzer als sog. statistische Copolykondensate, Block-Copolykondensate oder als gemischte Copolykondensate vorliegen.

3. Aminoalkylsubstituierte Organopolysiloxan-Thioharnstoffe, gemäß Anspruch 1 oder 2,
**dadurch gekennzeichnet,**
daß die Einheiten der Formel (II) eine Gruppe der Formel

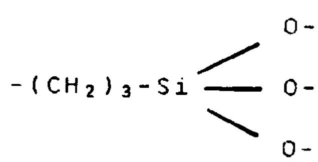

darstellen.

4. Verfahren zur Herstellung von Aminoalkylsubstituierten Organopolysiloxan-Thioharnstoffen gemäß Ansprüchen 1 bis 3,
**dadurch gekennzeichnet,**
daß man einen monomeren Aminoalkyl-substituierten Thioharnstoff der Formel

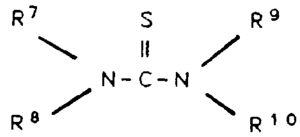 (V)

wobei $R^7$ für eine Gruppe der allgemeinen Formel

$$R^5 - Si(OR^{11})_3 \qquad (VI)$$

steht und $R^5$ dieselbe Bedeutung wie in Formel (II) von Anspruch 1 hat,
$R^{11}$ für eine lineare oder verzweigte Alkylgruppe mit 1 bis 5 C-Atomen steht,
$R^8$ dieselbe Bedeutung wie $R^7$ hat oder für H steht,
$R^9$ dieselbe Bedeutung wie $R^7$ hat oder für H oder eine Gruppe der Formel (III) von Anspruch 1 steht,
$R^{10}$ für H oder eine Gruppe der Formel (III) von Anspruch 1 steht,
und in dem monomeren Thioharnstoff der Formel (V) höchstens 2 Gruppen der Formel (VI) und höchstens 2 Gruppen der Formel (III) von Anspruch 1 enthalten sind,
gegebenenfalls nach Zusatz einer oder mehrerer Vernetzer der allgemeinen Formel

$$M(OR)_{2-4} R'_{0-2} \text{ bzw. } M(OR)_{2-3} R'_{0-1} \qquad (VII)$$

wobei M ein Silicium-, Titan-, Zirkon- oder Aluminiumatom, R' eine lineare oder verzweigte Alkylgruppe mit 1 bis 5 C-Atomen oder eine Phenylgruppe ist und R eine lineare oder verzweigte Alkylgruppe mit 1 bis 5 C-Atomen bedeutet, wobei das Verhältnis der Siliciumatome aus den Gruppen der allgemeinen Formel (VI) zu den Metallatomen der Formel (VII) 1 : 0 bis 1 : 20 beträgt,
in einem weitgehend wassermischbaren, aber den substituierten Thioharnstoff nach Formel (V) und Vernetzer nach Formel (VII), lösenden Lösungsmittel auflöst
und der Lösung unter Rühren eine zumindest für die vollständige Hydrolyse und Kondensation ausreichende Menge Wasser zufügt, das Reaktionsgemisch unter Weiterrühren bei einer bestimmten Temperatur im Bereich von Raumtemperatur bis 200° C geliert, den sich bildenden Feststoff gegebenenfalls nach Zusatz weiteren Lösungsmittels oder Wassers noch bis zu 48 Stunden bei Raumtemperatur bis 200°C, bei Normaldruck oder einem Druck, welcher der Summe der Partialdrucke bei der jeweiligen Temperatur entspricht, rührt, dann das Polykondensat nach gängigen Techniken von der flüssigen Phase abtrennt, gegebenenfalls wäscht, bei Raumtemperatur bis 250°C, gegebenenfalls unter Schutzgasatmosphäre oder im Vakuum trocknet, gegebenenfalls anschließend 1 bis 100 Stunden bei Temperaturen von 130° C bis 300° C an der Luft, unter Schutzgasatmosphäre oder im Vakuum tempert, gegebenenfalls mahlt und/oder klassifiziert.

**5.** Verfahren gemäß Anspruch 4,
**dadurch gekennzeichnet,**
daß als Lösungsmittel bei der Hydrolyse Methanol, Ethanol, n- und i- Propanol, n- und i- Butanol oder n-Pentanol allein oder in Mischung verwendet wird.

**6.** Verfahren nach Anspruch 3,
**dadurch gekennzeichnet,**
daß man die Hydrolyse mit Wasserüberschuß durchführt.

**7.** Verfahren zur Herstellung von vernetzten Organopolysiloxan-Thioharnstoffen gemäß Ansprüchen 1 bis 3,
**dadurch gekennzeichnet,**
daß man das Monomer nach Formel (V) und den oder die Vernetzer nach Formel (VII) ohne oder unter Verwendung eines Lösungsmittels, in Gegenwart einer, innerhalb des vorgegebenen Vorkondensationszeitraumes nicht zur vollständigen Hydrolyse ausreichenden Menge Wasser, vorzugsweise in Gegenwart von 1 bis 100 Mol% der hierzu benötigten Menge, über einen Zeitraum von 5 Min. bis zu 72 Stunden bei Raumtemperatur bis 200° C, gegebenenfalls unter Zusatz eines Kondensationskatalysators, vorkondensiert und dann nach Zusatz weiteren Wassers und gegebenenfalls weiteren Lösungsmittels weiter wie nach Anspruch 4 verfährt.

**8.** Verfahren zur Herstellung von vernetzten Organopolysiloxan-Thioharnstoffen gemäß Ansprüchen 1 bis 3,
**dadurch gekennzeichnet,**
daß man die monomere Komponente nach Formel (V) und den oder die Vernetzer nach Formel (VII) jeweils unabhängig voneinander 5 Min. bis 72 Stunden ohne oder unter Verwendung eines Lösungsmittels, in Gegenwart einer, innerhalb des vorgegebenen Vorkondensationszeitraumes nicht zur vollständigen Hydrolyse ausreichenden Menge Wasser, vorzugsweise in Gegenwart von 1 bis 100 Mol% der hierzu benötigten Menge, bei Raumtemperatur bis 200° C, gegebenenfalls unter Zusatz eines Kondensationskatalysators, vorkondensiert, anschließend die vorkondensierten Komponenten vereinigt und dann nach Zusatz weiteren Wassers und gegebenenfalls weiteren Lösungsmittels weiter wie nach Anspruch 4 verfährt.

9. Verfahren zur Herstellung von vernetzten Organopolysiloxan-Thioharnstoffen gemäß Ansprüchen 1 bis 3,
**dadurch gekennzeichnet**,
daß man die monomere Komponente nach Formel (V) oder den oder die Vernetzer nach Formel (VII) ohne oder unter Verwendung eines Lösungsmittels, in Gegenwart einer, innerhalb des vorgegebenen Vorkondensationszeitraumes nicht zur vollständigen Hydrolyse ausreichenden Menge Wasser, vorzugsweise in Gegenwart von 1 bis 100 Mol% der hierzu benötigten Menge, über einen Zeitraum von 5 Min. bis zu 24 Stunden bei Raumtemperatur bis 200° C vorkondensiert und anschließend die vorkondensierten und nicht vorkondensierten Komponenten vereinigt und dann nach Zusatz weiteren Wassers und gegebenenfalls weiteren Lösungsmittels weiter wie nach Anspruch 4 verfährt.

10. Verwendung der erfindungsgemäßen aminoalkylsubstituierten Organopolysiloxan-Thioharnstoff-Derivate gemäß Ansprüchen 1 bis 3 zur Entfernung von gelösten Metallen aus wäßrigen oder organischen Phasen.

## Claims

1. Aminoalkyl-substituted organopolysiloxane thioureas built up of units of the formula

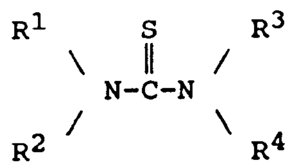
(I)

wherein
$R^1$ stands for a group of the formula

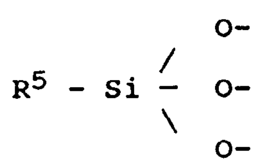
(II)

in which $R^5$ denotes an alkylene group having 1 to 10 carbon atoms or a cycloalkylene group having 5 to 8 carbon atoms or a group of the formula

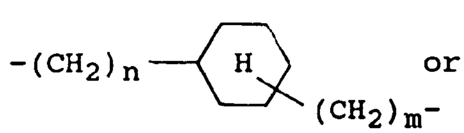
or
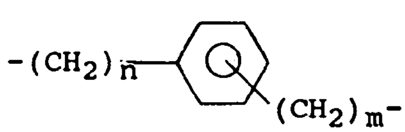

wherein
n = 1 - 6 (on the nitrogen) and
m = 0 - 6 (on the silicon),
$R^2$ has the same meaning as $R^1$ or it stands for H,
$R^3$ has the same meaning as $R^1$ or it stands for H or for a group of the formula

$$-(CH_2)_n-NR^6_2 \quad (III)$$

in which n = 1 - 6 and $R^6$ stands for H or for a straight chain or branched alkyl group having 1 to 5 carbon atoms, and $R^4$ stands for H or for a group of the formula (III), and the polymer unit corresponding to formula (I) contains at most two groups of the formula (II) and at most two groups of formula (III), and the free valencies of the oxygen atoms attached to the silicon atom are saturated as in silica structures by silicon atoms of other groups of the formula (II) and/or via the metal atoms in one or more cross-linking bridging members of the following formulae:

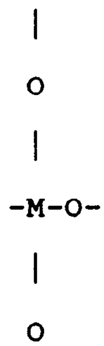 or 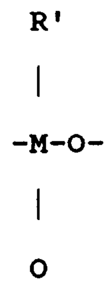 or 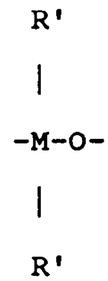 (IV)

or

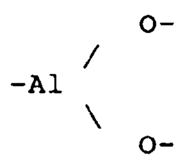 or 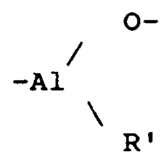 (IV)

wherein M denotes a silicon, titanium or zirconium atom and R' is a phenyl group or a straight chain or branched alkyl group having 1 to 5 carbon atoms and the ratio of silicon atoms in groups of the general formula (II) to the metal atoms in the bridging members corresponding to formula ( IV) is from 1 : 0 to 1 : 20.

**2.** Aminoalkyl substituted organopolysiloxane-thioureas according to Claim 1, characterised in that they exist as so-called random copolycondensates, block copolycondensates or mixed copolycondensates with respect to the cross-linking agents optionally present.

**3.** Aminoalkyl substituted organopolysiloxane-thioureas according to Claim 1 or 2, characterised in that the units of formula (II) consist of a group of the following formula

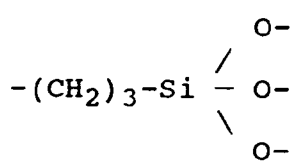 .

**4.** A process for the preparation of aminoalkyl-substituted organopolysiloxane-thioureas according to Claims 1 to 3, characterised in that a monomeric aminoalkyl-substituted thiourea of the formula

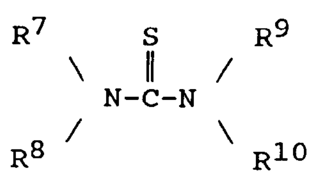 (V)

wherein $R^7$ stands for a group of the general formula

$$R^5 - Si(OR^{11})_3 \qquad (VI)$$

and $R^5$ has the same meaning as in formula (II) of Claim 1,
$R^{11}$ stands for a straight chain or branched alkyl group having 1 to 5 carbon atoms,
$R^8$ has the same meaning as $R^7$ and stands for H,
$R^9$ has the same meaning as $R^7$ or stands for H or for a group of formula (III) of Claim 1,
$R^{10}$ stands for H or a group of formula (III) of Claim 1,
and the monomeric thiourea of formula (V) contains at most 2 groups of formula (VI) and at most 2 groups of formula (III) of Claim 1 is dissolved in a solvent which is substantially water-miscible but dissolves the substituted thiourea of formula (V) and cross-linking agents corresponding to formula (VII) shown below, optionally after the addition of one or more cross-linking agents corresporiding to the general formula

$$M(OR)_{2-4}\,R'_{0-2} \text{ or } M(OR)_{2-3}\,R'_{0-1} \qquad (VII)$$

wherein M is a silicon, titanium, zirconium or aluminium atom, R' is a straight chain or branched alkyl group having 1 to 5 carbon atoms or a phenyl group and R denotes a straight chain or branched alkyl group having 1 to 5 carbon atoms, the ratio of the silicon atoms in the groups of the general formula (VI) to the metal atoms of formula (VII) being from 1 : 0 to 1 : 20,
and a quantity of water at least sufficient for complete hydrolysis and condensation is added to the solution with stirring, the reaction mixture is gelled at a particular temperature in the range of from room temperature to 200°C with continued stirring, the solid which forms continues to be stirred for up to 48 hours at a temperature from room temperature to 200°C at normal pressure or a pressure corresponding to the sum of the partial pressures at the given temperature, optionally after the addition of further solvent or water, and the polycondensate is then separated from the liquid phase by conventional techniques and is optionally washed, is dried at a temperature from room temperature to 250°C, optionally under a protective gas atmosphere or in a vacuum, and is optionally thereafter heat treated for 1 to 100 hours at temperatures from 130°C to 300°C in air, under a protective gas atmosphere or in a vacuum, and is optionally ground and/or classified.

5. A process according to Claim 4, characterised in that the solvent used for hydrolysis is methanol, ethanol, n- and i-propanol, n- and i-butanol or n-pentanol, alone or as a mixture.

6. A process according to Claim 3, characterised in that hydrolysis is carried out with an excess of water.

7. A process for the preparation of cross-linked organopolysiloxane-thioureas according to Claims 1 to 3, characterised in that the monomer corresponding to formula (V) and the one or more than one cross-linking agent corresponding to formula (VII) are precondensed with or without the aid of a solvent at a temperature from room temperature to 200°C for a period of from 5 minutes to 72 hours in the presence of a quantity of water insufficient for complete hydrolysis within the given time available for precondensation, preferably in the presence of from 1 to 100 mol-% of the quantity of water required for this purpose, optionally with the addition of a condensation catalyst, and the process is then continued as in Claim 4 after the addition of a further quantity of water and optionally a further quantity of solvent.

8. A process for the preparation of cross-linked organopolysiloxane-thioureas according to Claims 1 to 3, characterised in that the monomeric component corresponding to formula (V) and the one or more than one cross-linking agent corresponding to formula (VII) are each precondensed independently of one another for 5 minutes to 72 hours with or without the aid of a solvent at a temperature from room temperature to 200°C, in the presence of a quantity of water insufficient for complete hydrolysis within the given time available for precondensation, preferably in the presence of from 1 to 100 mol-% of the quantity of water required for this purpose, optionally with the addition of a condensation catalyst,and the precondensed components are then combined and the process is then continued as in Claim 4 after the addition of a further quantity of water and optionally a further quantity of solvent.

9. A process for the preparation of cross-linked organopolysiloxane-thioureas according to Claims 1 to 3, characterised in that the monomeric component corresponding to formula (V) or the one or more than one cross-linking agent corresponding to formula (VII) is precondensed at a temperature from room temperature to 200°C over a period of from 5 minutes to 24 hours with or without the aid of a solvent and in the presence of a quantity of water insufficient for complete hydrolysis within the given time available for precondensation, preferably in the presence of from 1 to 100 mol-% of the quantity of water required for this purpose, and the precondensed components and those which have not been precondensed are then

combined and the process is then continued as in Claim 4 after the addition of a further quantity of water and optionally a further quantity of solvent.

**10.** Use of the aminoalkyl-substituted organopoly-siloxane-thiourea derivatives according to the invention claimed in claims 1 to 3 for the removal of dissolved metals from aqueous or organic phases.

## Revendications

**1.** Organopolysiloxane-thiourées ayant des groupes aminoalkyles constituées à partir d'unités de formule

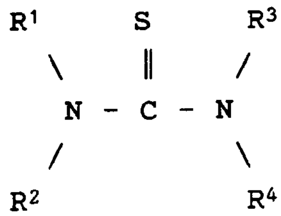

(I)

dans laquelle $R^1$ représente un groupe de formule

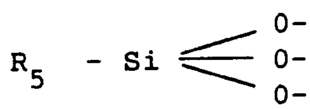

(II)

dans laquelle $R^5$ est un groupe alkylène de 1 à 10 atomes de C ou un groupe cycloalkylène de 5 à 8 atomes de C ou un reste de formule

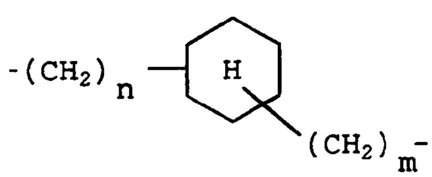

ou

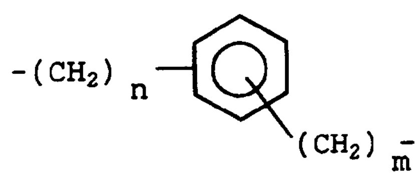

avec

n = 1 - 6 (sur l'azote)

m = 0 - 6 (sur le silicium)

$R^2$ ayant la même signification que $R^1$ ou représente H,

$R^3$ a la même signification que $R^1$ ou représente un groupe

$$-(CH_2)_n-NR^6_2 \quad \text{(III)}$$

dans lequel n = 1 - 6 et $R^6$ est H ou un groupe alkyl linéaire ou ramifié avec 1 à 5 atomes de C.

$R^4$ est H ou un groupe de formule (III), et dans l'unité polymère de formule (I) se trouvent au plus 2 groupes de formule (II) et au plus 2 groupes de formule (III) et les valences libres des atomes d'oxygène fixés sur l'atome de silicium sont saturées comme dans le réseau de la silice par des atomes de silicium d'autres groupes de formule (II) et/ou par les atomes métalliques dans un ou plusieurs pontages

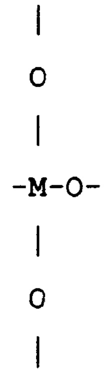 ou 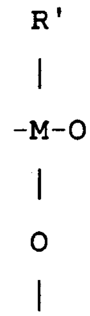 ou 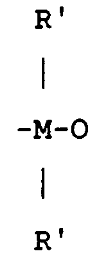 (IV)

ou

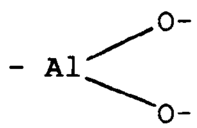 ou 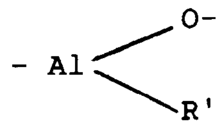 (IV)

M étant un atome de silicium, de titane ou de zirconium et $R^1$ un groupe phényle ou un groupe alkyle linéaire ou ramifié avec 1 à 5 atomes de C et la proportion des atomes de silicium des groupes de formule générale (II) aux atomes de métal dans les pontages de formule (IV) est de 1 : 0 à 1 : 20.

2. Organopolysiloxane-thiourées ayant des groupes aminoalkyles selon la revendication 1, caractérisées en ce qu'en relation avec l'agent réticulant présent le cas échéant elles existent sous forme de copolycondensat ou de bloc-copolycondansats dits statistiques ou de copolycondensats mélangés.

3. Organopolysiloxane-thiourées ayant des groupes aminoalkyles, selon la revendication 1 ou 2, caractérisées en ce que les unités de formule (II) représentent un groupe de formule

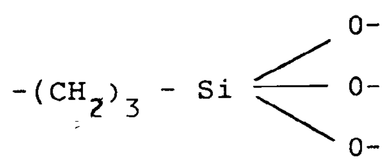

4. Procédé de préparation d'organopolysiloxane-thiourées ayant des groupes aminoalkyles selon les revendications 1 à 3, caractérisé en ce que une thiourée aminoalkyle substituée monomère de formule

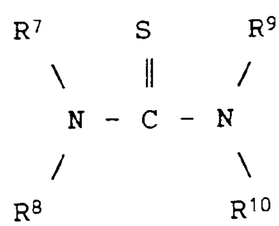 (V)

dans laquelle $R^7$ est un groupe de formule générale

$$R^5 - Si(OR^{11})_3 \quad (VI)$$

et $R^5$ a la même signification que dans la formule (II) de la revendication 1,
$R^{11}$ est un groupe alkyle linéaire ou ramifié de 1 à 5 atomes de C,
$R^8$ a la même signification que $R^7$ ou représente H,
$R^9$ a la même signification que $R^7$ on représente H ou un groupe de formule (III) de la revendication 1,
$R^{10}$ est H ou un groupe de formule (III) de la revendication 1,

et dans la thiourée monomère de formule (V) se trouvent au plus 2 groupes de formule (VI) et au plus 2 groupes de formule (III) de la revendication 1,
le cas échéant après addition d'un ou plusieurs agents réticulants de formule générale

$$M(OR)_{2-4}\,R'_{0-2} \text{ ou } M(OR)_{2-3}\,R'_{0-1} \qquad (VII)$$

dans laquelle M est un atome de silicium de titane, de zirconium ou d'aluminium, R' est un groupe alkyle linéaire ou ramifié avec 1 à 5 atomes de C ou un groupe phényle et R est un groupe alkyle linéaire ou ramifié avec 1 à 5 atomes de C, la proportion des atomes de silicium des groupes de formule générale (VI) aux atomes métalliques de formule (VII) étant de 1 : 0 à 1 : 20, on dissout dans un solvant largement miscible à l'eau mais dissolvant la thiourée substituée de formule (V) et l'agent réticulant de formule (VII), et on ajoute à la solution sous agitation une quantité d'eau au moins nécessaire à l'hydrolyse complète et à la condensation, on gélifie le mélange réactionnel en continuant d'agiter à une température définie dans l'intervalle de la température ambiante jusqu'à 200°C, on agite le solide se formant le cas échéant après addition de solvant supplémentaire ou d'eau pendant jusqu'à 48 heures entre la température ambiante et 200°C, à pression atmosphérique ou sous une pression, qui est la somme des pressions partielles aux températures correspondantes, ensuite on sépare le polycondensat de la phase liquide selon les techniques habituelles, le cas échéant on lave, on sèche entre la température ambiante et 250°C, le cas échéant sous atmosphère de gaz protecteur ou sous vide, le cas échéant on traite entre 1 et 100 heures à des températures comprises entre 130°C et 300°C à l'air, sous atmosphère de gaz protecteur ou sous vide, le cas échéant on broie et/ou fractionne.

**5.** Procédé selon la revendication 4, caractérisé en ce qu'on utilise comme solvant lors de l'hydrolyse du méthanol, de l'éthanol, du n- et i- propanol, n et i-butanol ou n-pentanol seul ou en mélange.

**6.** Procédé selon la revendication 3, caractérisé en ce qu'on réalise l'hydrolyse avec un excès d'eau.

**7.** Procédé de préparation d'organopolysiloxane-thiourées réticulées selon les revendications 1 à 3, caractérisé en ce qu'on précondense le monomère de formule (V) et le ou les agents réticulants de formule (VII) sans ou en utilisant un solvant, en présence d'une quantité d'eau insuffisante pour hydrolyser complètement pendant l'intervalle de temps défini pour la précondensation, de préférence en présence de 1 à 100 % molaire de la quantité qui serait nécessaire, sur un intervalle de temps de 5 min à 72 heures entre la température ambiante et 200°C le cas échéant après addition d'un catalyseur de condensation et après l'addition d'eau supplémentaire et le cas échéant d'autre solvant on procède comme à la revendication 4.

**8.** Procédé de préparation d'organopolysiloxane-thiourées réticulées selon les revendications 1 à 3, caractérisé en ce qu'on précondense indépendamment l'un de l'autre le composant monomère de formule (V) et le ou les agents réticulants de formule (VII), sans ou avec utilisation d'un solvant en présence d'une quantité d'eau insuffisante pour hydrolyser complètement pendant l'intervalle de temps défini pour la précondensation, de préférence en présence de 1 à 100 % molaire de la quantité qui serait nécessaire, sur un intervalle de temps de 5 min à 72 heures entre la température ambiante et 200°C, le cas échéant en présence d'un catalyseur de condensation et ensuite on réunit les composants précondensés et après l'addition d'eau supplémentaire et de solvant supplémentaire essentiellement, on opère comme à la revendication 4.

**9.** Procédé de préparation d'organopolysiloxane-thiourées réticulées selon les revendications 1 à 3, caractérisé en ce qu'on précondense indépendamment le composant monomère de formule (V) et le ou les agents réticulants de formule (VII), sans ou avec utilisation d'un solvant, en présence d'une quantité d'eau insuffisante pour hydrolyser complètement pendant l'intervalle de temps défini pour la précondensation, de préférence en présence de 1 à 100 % molaire de la quantité qui serait nécessaire, sur un intervalle de temps de 5 min à 24 heures entre la température ambiante et 200°C, et ensuite on réunit les composants précondensés et non précondensés et ensuite après addition d'eau supplémentaire et le cas échéant de solvant supplémentaire on opère comme à la revendication 4.

**10.** Utilisation de dérivés d'organopolysiloxane-thiourées de l'invention selon les revendications 1 à 3 pour éliminer des métaux dissous dans des phases aqueuses et organiques.